# EUROPÄISCHE PATENTSCHRIFT

(11) **EP 2 531 657 B1**
(45) Veröffentlichungstag und Bekanntmachung des Hinweises auf die Patenterteilung: **08.01.2014**
(21) Anmeldenummer: 11703388.6
(22) Anmeldetag: 01.02.2011
(51) Int. Cl.: E02D 27/42

(54) **OFF SHORE GRÜNDUNG**
OFF SHORE FOUNDATION
FONDATION OFF SHORE

(30) Priorität: 01.02.2010 DE 102010006458
(43) Veröffentlichungstag der Anmeldung: 12.12.2012
(73) Patentinhaber: STRABAG Offshore Wind GmbH, 70567 Stuttgart (DE)
(72) Erfinder: WEBER, Klaus, 72366 Balingen (DE); BREYER, Bernd, 70563 Stuttgart (DE)
(74) Vertreter: Zurhorst, Stefan
(86) Internationale Anmeldenummer: PCT/EP2011/000452
(87) Internationale Veröffentlichungsnummer: WO 2011/092038

(56) Entgegenhaltungen:
- WO-A1-2008/153491
- DE-A1-102006 034 461
- GB-A- 2 434 823

## Beschreibung

Die Erfindung betrifft ein Verfahren zur Installation mindestens einer Flachgründung, insbesondere einer Offshore-Windenergieanlage auf dem Meeresgrund, sowie eine Installationsanordnung, die nach einem solchen Verfahren hergestellt ist.

Windenergieanlagen zur Gewinnung von elektrischem Strom brauchen Standorte mit ausreichenden und verlässlichen Windverhältnissen. Da solche Standorte auf dem Festland nur eingeschränkt zur Verfügung stehen und außerdem häufig auch schon mit Windenergieanlagen bebaut sind, werden zunehmend Standorte auf dem offenen Meer in Betracht gezogen. Einerseits steht dort hinreichend Platz zur Verfügung. Andererseits kann dort mangels natürlicher Hindernisse mit im Mittel ausreichender Windenergie gerechnet werden.

Die Installation von sogenannten Offshore-Windenergieanlagen (OWEA) auf dem offenen Meer stellt eine technologische und auch logistische Herausforderung dar. Die einzelnen OWEAs müssen auf dem Meeresgrund zuverlässig gegründet sein, um selbst bei extremen Witterungsbedingungen wie winterlichen Stürmen ihre Standfestigkeit beizubehalten. Hierzu werden unter anderem sogenannte Flachgründungen eingesetzt, die nach dem Prinzip einer Schwergewichtsgründung auf dem Meeresboden aufgesetzt werden und die OWEA tragen. Die zu erwartenden Belastungen aus Horizontalkräften und daraus resultierenden Momentenbeanspruchungen werden durch Sohlspannungen in den Baugrund abgetragen. Ein Kippen der Gründung wird dabei durch das Eigengewicht der Konstruktion verhindert.

Für den Lastabtrag wird ein ausreichend tragfähiger Boden benötigt. Der Meeresgrund ist jedoch häufig mit weichen Sedimenten wie Schlick oder dergleichen bedeckt, so dass ein tragfähiger Baugrund in den seltensten Fällen unmittelbar zur Verfügung steht. Ja nach Standort ist ein Voraushub erforderlich, mit dem die oberen, nicht tragfähigen Schichten zunächst entfernt werden.

Ein weiteres Problem resultiert aus der Umströmung der Gründung beispielsweise in Form von Tiden oder welleninduzierten Strömungen, die zur Bildung sogenannter Kolke führen kann. Kolke sind muldenförmige Ausspülungen, die die Tragfähigkeit der Gründung signifikant herabsetzen können. Es ist deshalb ein wirksamer Kolkschutz vorzusehen.

Aus der DE 10 2006 034 461 A1 ist eine Vorrichtung zum Planieren und Einbringen und Verteilen von Schüttmaterial auf einer planierten Fläche auf dem Meeresboden bekannt. Hierbei ist vorgesehen, in den Meeresboden eine Vertiefung auszubaggern und dort ein Planum herzustellen, auf dem die Gründung einer Windenergieanlage aufgestellt wird. Das Planum wird durch aufgeschichteten Schotter gebildet und mittels der Vorrichtung eingeebnet. Der Schotter dient einerseits als Kolkschutz und andererseits als Sohle, auf dem die Gründung der Windenergieanlage aufgestellt wird.

Die vorgenannte Vorgehensweise birgt verschiedene, insbesondere logistische Nachteile. Geeigneter Schotter ist unter Offshore-Bedingungen vor Ort nicht verfügbar und muss also an den Installationsort herbeigeschafft werden. Umgekehrt entsteht bei der Herstellung der Baugrube ein erheblicher Aushub, der abtransportiert und an geeigneter Stelle verklappt werden muss. Neben ökologischen Nachteilen entsteht das Problem des hohen erforderlichen Zeit- und Transportaufwandes. Die Arbeiten können nur sequentiell durchgeführt werden. Die Installation größerer OWEA-Parks ist unter dem vorstehend beschriebenen hohen Zeitaufwand auch dadurch beeinträchtigt, dass unter Offshore-Bedingungen immer nur beschränkte Zeitfenster mit hinreichend guten Wetterbedingungen zur Verfügung stehen, innerhalb derer Installationsarbeiten durchgeführt werden können. Derartige Zeitfenster stehen meist nur im Sommerhalbjahr zur Verfügung, weshalb eine wirtschaftliche Gesamtinstallation nach Möglichkeit innerhalb einer solchen Zeitspanne abgeschlossen werden sollte.

Der Erfindung liegt daher die Aufgabe zugrunde, ein Verfahren zur Installation von mindestens zwei und insbesondere mehreren Flachgründungen auf dem Meeresgrund anzugeben, welches bei Erzielung einer zuverlässigen Gründung zu einem verbesserten Zeit- und Materialeinsatz führt.

Diese Aufgabe wird durch ein Verfahren mit den Merkmalen des Anspruchs 1 gelöst.

Der Erfindung liegt des Weiteren die Aufgabe zugrunde, eine Installationsanordnung mit mindestens zwei Flachgründungen auf dem Meeresgrund anzugeben, die einfacher und schneller aufgestellt werden kann.

Diese Aufgabe wird durch eine Installationsanordnung mit den Merkmalen des Anspruchs 12 gelöst.

Nach der Erfindung wird vorgeschlagen, dass in den Meeresgrund zunächst mindestens zwei und insbesondere mehrere Baugrubeen unter Bildung von Aushub eingebracht werden, wobei die Tiefe der jeweiligen Baugrube derart bemessen ist, dass eine Sohle der Baugrube aus einem für die Flachgründung tragfähigen Material besteht. Die Sohle der ersten Baugrube wird insbesondere durch weiteren Abtrag von tragfähigem Material unter Bildung von weiterem Aushub planiert. Anschließend wird eine erste Flachgründung auf die planierte Sohle einer ersten Baugrube aufgestellt. Außerdem wird eine zweite Baugrube ausgehoben und planiert. Der bei der zweiten Baugrube entstehende Aushub wird unmittelbar zu einem Kolkschutz weiterverarbeitet, und dieser Kolkschutz wird in der ersten Baugrube eingesetzt.

Bei dem erfindungsgemäßen Verfahren und der erfindungsgemäßen, nach diesem Verfahren hergestellten Installationsanordnung ist weder die Zufuhr von externem Material wie Schotter oder dergleichen als Kolkschutz noch die Abfuhr von Aushub sowie spätere Verklappung dieses Aushubes erforderlich. Vielmehr ist die gesamte Vorgehensweise materialneutral, indem die Materialbilanz einer einzelnen Baustelle hinsichtlich Aushub und Kolkschutzmaterial ausgeglichen ist. Der Zeit- und Transportaufwand für den Aushub und das Kolkschutzmaterial ist auf ein Minimum reduziert, so dass innerhalb eines wetterbedingten Zeitfensters eine vergrößerte Anzahl von Flachgründungen installiert werden kann. Außerdem sind Kosten und Umweltbeeinträchtigung vermindert.

Außerdem erlaubt die erfindungsgemäße Vorgehensweise eine erhebliche Zeiteinsparung und auch Reduzierung der Materialwege, indem von einer rein sequenziellen Vorgehensweise abgewichen werden kann. Insbesondere ist ein verschachteltes Arbeiten möglich, bei dem die zweite Baugrube ausgehoben und planiert wird, und bei dem gleichzeitig die vorangegangene erste Baugrube mit der dort aufgestellten ersten Gründung vollendet werden kann. Sobald die Flachgründung auf der planierten Sohle der ersten Baugrube abgesetzt ist, kann das zugehörige Installationsschiff zurück zum Basishafen fahren, um die nächste dort vorbereitete Flachgründung abzuholen. Gleichzeitig beginnen die Aushubarbeiten an der zweiten Baugrube. Der dabei erzeugte Aushub wird insbesondere unmittelbar nach seinem Entstehen in unmittelbarer Nähe zur Baugrube auf einer schwimmenden Arbeitsplattform der Weiterverarbeitung zugeführt und/oder je nach Bedarf dort zwischengelagert. Von dieser schwimmenden Arbeitsplattform aus, die auch als Offshore-Construction-Vessel (OCV) bezeichnet wird, wird der als Kolkschutz und/oder als Ballast und/oder als loses Füllmaterial weiterverarbeitete Aushub der ersten Baugrube mit der dort aufgestellten Flachgründung zugeführt, ohne dass eine planmäßige Zwischenlagerung des Aushubes auf dem Meeresgrund erforderlich ist. All dies oder zumindest ein Teil davon kann während der Zeit geschehen, die das Installationsschiff braucht, um vom Installationsort zum Basishafen und von dort mit einer neuen Flachgründung zum Installationsort zurückzukehren. Das zur Verfügung stehende, durch die Fahrtzeiten des Installationsschiffes vorgegebene Zeitintervall wird maximal ausgenutzt, indem sämtliche Aushub-, Kolkschutz- und Verfiillarbeiten unter parallelem Arbeiten an zwei Installationsorten durchgeführt werden. Innerhalb eines verfügbaren Wetterfensters kann die Anzahl der fertiggestellten Installationsorte maximiert werden. Durch die enge Verzahnung der Arbeiten reduziert sich die Dauer der notwendigen Wetterfenster auf einen sicher zu prognostizierten Zeitraum. Eine Unterbrechung der Arbeit nach Installation des Fundamentes aufgrund ungünstiger Wetterbedingungen führt nicht zu grundlegenden Störungen im Ablauf. Eine Rückfahrt mit dem leeren Installationsschiff ist bei rauer See ohne Weiteres möglich. Das ggf. noch nicht mit Kolkschutz gesicherte Fundament ist temporär standsicher. Ein Abflachen der Baugrubenböschung stellt nach erfolgtem Abstellen der Flachgründung kein Problem dar. Sobald die Bedingungen günstiger werden, können Kolkschutz und Verfüllarbeiten unmittelbar wieder aufgenommen werden.

In bevorzugter Weiterbildung wird der Kolkschutz durch textile, mit dem Aushub befüllte Container gebildet. Diese können ohne Weiteres unter Offshore-Bedingungen auf der schwimmenden Arbeitsplattform hergestellt und in geeigneter Menge und Anzahl auf den Meeresgrund bzw. in die Baugrube an der gewünschten Stelle abgesenkt werden. Die textilen Container sind in der Lage, auch weiches Aushubmaterial zusammenzuhalten und vor Wegspülung durch Wasserströmung zu sichern. Die als optimal ermittelte räumliche Anordnung der Container in der Baugrube bzw. an der Flachgründung bleibt zuverlässig auch unter ausgeprägten Umströmungsbedingungen erhalten.

Ergänzend kann es zweckmäßig sein, zumindest einen Teil des Aushubes als Ballast für die Flachgründung einzusetzen. Bevorzugt weist die Flachgründung hierzu Ballastkammern insbesondere in Form von hohlen Fundamentkästen und/oder eines hohlen Fundamentschaftes auf, die mit dem Aushub befüllt werden. Dies erlaubt eine gewichtsreduzierte Ausgestaltung des hohlen Grundkörpers der Flachgründung einhergehend mit einer einfachen Transportierbarkeit. Das notwendige Gewicht der Flachgründung wird erst am Aufstellort durch Befüllen mit dem genannten Ballast erzeugt, was die Installationsarbeiten vereinfacht und dennoch eine hohe Standsicherheit der Flachgründungen sicherstellt.

Alternativ oder zusätzlich kann es zweckmäßig sein, dass die Flachgründung auf der planierten Sohle direkt aufliegende Fundamentplatten aufweist, wobei der insbesondere in textile Container eingefüllte Aushub als Ballast auf die Fundamentplatten aufgelegt wird. Die vorgenannten Container wirken damit in Doppelfunktion einerseits als Kolkschutz und andererseits als zusätzlicher Ballast, der für eine sichere Verankerung der Flachgründung auf der Baugrubensohle sorgt.

Ein weiterer Teil des erzeugten Aushubes kann noch als loses Füllmaterial in die Baugrube eingebracht werden. Die Flachgründung und auch der dort angebrachte Kolkschutz sind zusätzlich abgedeckt und gegen Strömungseinflüsse geschützt, so dass die Beständigkeit der Gründung weiter verbessert ist.

In vorteilhafter Weiterbildung wird die Baugrube mit einer Böschung versehen, deren Neigung insbesondere in einem Bereich von einschließlich 1:3 bis einschließlich 1:10 liegt und insbesondere etwa 1:5 beträgt. Die Böschung sorgt dafür, dass die Baugrube nicht vorschnell wieder zugespült wird, bevor die Flachgründung auf die Sohle aufgesetzt wird. Mit den genannten Böschungsneigungen ist ein guter Kompromiss zwischen Herstellbarkeit unter Unterwasserbedingungen und Minimierung der Aushubkubatur gefunden.

Ein Ausführungsbeispiel der Erfindung ist nachfolgend anhand der Zeichnung näher beschrieben. Es zeigen:
- Fig. 1: In einer schematischen Seitenansicht eine Offshore-Windenergieanlage mit einer Flachgründung im schwimmenden Zustand zu Beginn der Installation auf dem mit einer Baugrube versehenen Meeresgrund;
- Fig. 2: die Anordnung nach Fig. 1 mit in die Baugrube abgesenkter Flachgründung;
- Fig. 3: die Anordnung nach Fig. 2 im Wechselspiel mit einer weiteren Baugrube, deren Aushub in der mit der Flachgründung versehenen Baugrube eingesetzt wird;
- Fig. 4: eine schematische Draufsicht der Baugrube nach den Fig. 1 bis 3 nach dem Voraushub;
- Figl. 5: die Baugrube nach Fig. 4 mit einer abgesetzten Planiereinrichtung beim Planieren der Baugrubensohle;
- Fig. 6: die Baugrube nach den Fig. 4 und 5 mit auf der planierten Sohle aufgesetzter Flachgründung;
- Fig. 7: die Anordnung nach Fig. 6 mit aufgebrachtem Kolkschutz und in die Flachgründung eingefülltem Aushub als Ballast;
- Fig. 8: eine Querschnittsdarstellung der Anordnung nach Fig. 7 entlang der dort gezeigten, mit VIII-VIII gekennzeichneten Schnittlinie;
- Fig. 9: eine Querschnittsdarstellung der Anordnung nach Fig. 7 entlang der dort mit IX-IX gekennzeichneten Schnittlinie mit weiteren Einzelheiten zur Anordnung des Kolkschutzes, von Ballast und von losem Füllmaterial.

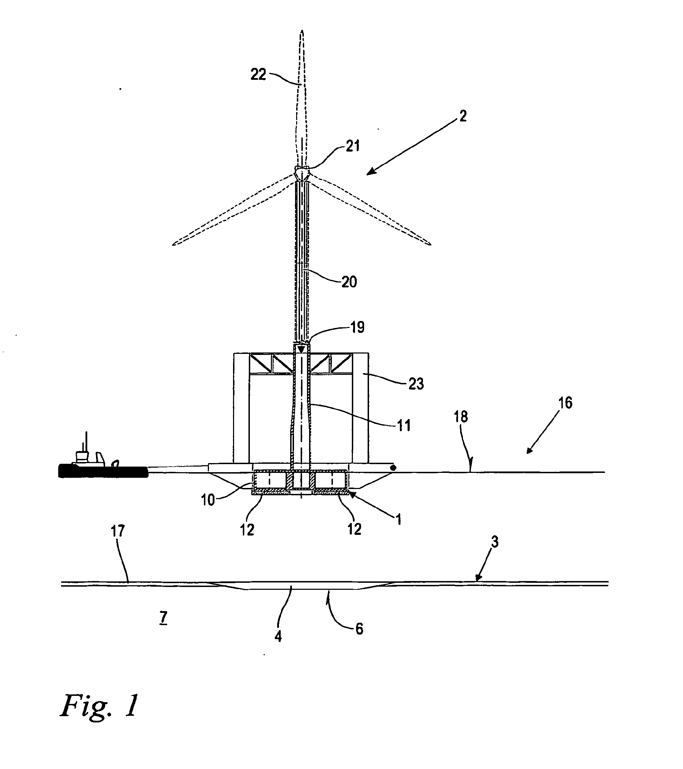

Fig. 1 zeigt in einer schematischen Seitenansicht eine Flachgründung 1 für eine Offshore-Windenergieanlage 2 zur Installation auf dem Meeresgrund 3. Die Offshore-Windenergieanlage 2 umfasst einen vertikal aufgerichteten Mast 20, an dessen oberen Ende ein elektrischer Generator 21 angeordnet ist. Turbinenflügel 22 sind im Betrieb dem Wind ausgesetzt und treiben drehend den Generator 21 für die Erzeugung von elektrischem Strom an.

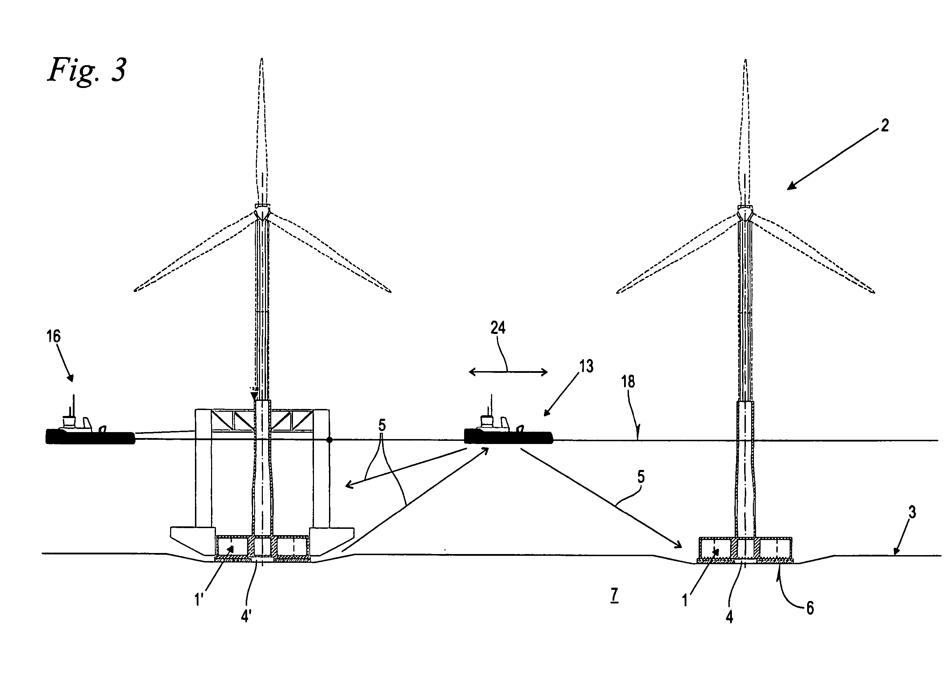

Die Flachgründung 1 ist als Schwergewichtsgründung für die Offshore-Windenergieanlage 2 ausgeführt und zum Abstellen auf dem Meeresgrund 3 vorgesehen. In dem in Fig. 3 dargestellten und weiter unten näher beschriebenen abgestellten Zustand werden die an der Offshore-Windenergieanlage 2 zu erwartenden Betriebsbelastungen insbesondere aus Horizontalkräften und daraus resultierenden Momentbeanspruchungen durch Sohlspannungen in den Meeresgrund 3 abgetragen. Ein Kippen der Offshore-Windenergieanlage 2 einschließlich seiner Flachgründung 1 wird dabei durch das Eigengewicht der Gesamtkonstruktion verhindert. Im gezeigten Ausführungsbeispiel umfasst die Flachgründung 1 hierzu Fundamentkästen 10 mit an der Unterseite angebrachten Fundamentplatten 12 sowie einen mittigen, vertikal aufgerichteten Fundamentschaft 11. Der Fundamentschaft 11 ist an seinem oberen Ende mit einer Schnittstelle 19 versehen, an der der Mast 20 der Offshore-Windenergieanlage 2 befestigt ist.

Entsprechend der Darstellung nach Fig. 1 wird die gesamte Offshore-Windenergieanlage 2 einschließlich ihrer Flachgründung 1 in einem nicht dargestellten Basishafen vorbereitet und mittels eines Installationsschiffes 16 zum Installationsort nach Fig. 1 verbracht. Hierzu ist eine Schwimmvorrichtung 23 vorgesehen, die die gesamte Anordnung an der Wasseroberfläche 18 trägt, und die mittels des Installationsschiffes 16 verfahren bzw. manövriert werden kann. Es kann aber auch zweckmäßig sein, zunächst nur die Flachgründung 1 ohne die vormontierte Offshore-Windenergieanlage 2 zu transportieren und abzusetzen. Gegebenenfalls ist hierzu keine eigene Schwimmvorrichtung 23 erforderlich, so dass Transport und Installation direkt mit dem Transportschiff 16 erfolgen können.

Unterhalb der Wasseroberfläche 18 befindet sich der Meeresgrund 3 in einer typischen und beispielhaften Seetiefe von 20 bis 60 Metern. Natürlich kann das erfindungsgemäße Verfahren auch in abweichenden Seetiefen eingesetzt werden.

Der Meeresgrund 3 besteht aus einem für die Flachgründung 1 einschließlich der darauf aufgebauten Offshore-Windenergieanlage 2 tragfähigen Material 7 beispielsweise in Form von Schluff, Sand, Kies oder dergleichen. Auf dem tragfähigen Material 7 befindet sich im Regelfall eine weiche Deckschicht 17 aus verschiedenen Sedimenten wie Schlick oder dergleichen, deren Tragfähigkeit für die Installation der Offshore-Windenergieanlage 2 mittels der Flachgründung 1 nicht ausreichend ist. Es werden deshalb in den Meeresgrund 3 mindestens zwei Baugruben 4, 4' eingebracht, wobei die Tiefe der Baugruben 4, 4' derart bemessen ist, dass die Deckschicht 17 durchdrungen wird und sich eine Sohle 6 der Baugruben 4, 4' ausbildet, die aus dem tragfähigen Material 7 besteht.

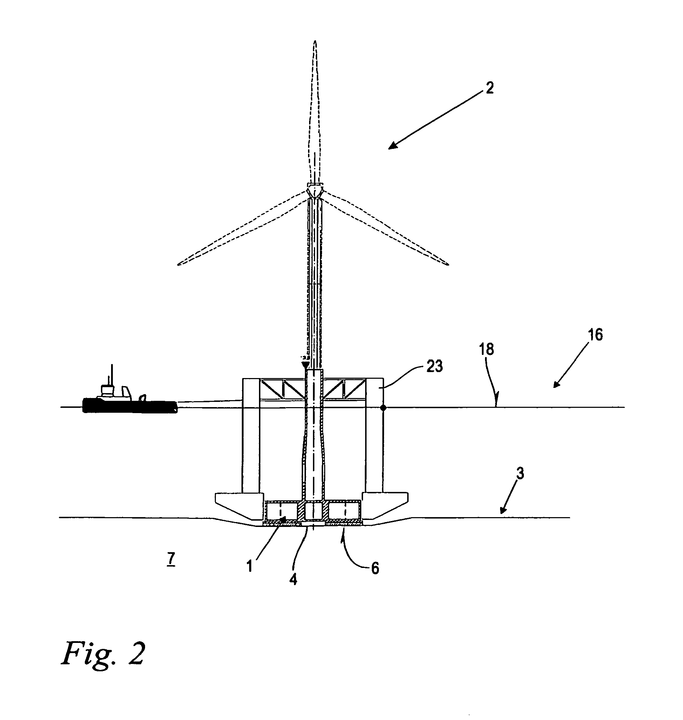

Aus der Zusammenschau der Fig. 1 und 2 ergibt sich, dass die Flachgründung 1 mittels des Installationsschiffes 16 über einer ersten Baugrube 4 positioniert und dann auf deren Sohle 6 abgesenkt wird. Entsprechend der Darstellung nach Fig. 2 wird hierzu die Schwimmvorrichtung 23 einschließlich der Flachgründung 1 und der Offshore-Windenergieanlage 2 als gesamte Baugruppe gegenüber der Wasseroberfläche 18 abgesenkt, bis die Flachgründung 1 auf der aus tragfähigem Material 7 bestehenden Sohle 6 der Baugrube 4 aufsteht.

Nachdem dies geschehen ist, fährt das Installationsschiff 16 einschließlich der Schwimmvorrichtung 23 zurück zum Basishafen, um die nächste Flachgründung 1 gegebenenfalls zusammen mit der Offshore-Windenergieanlage 2 zu holen.

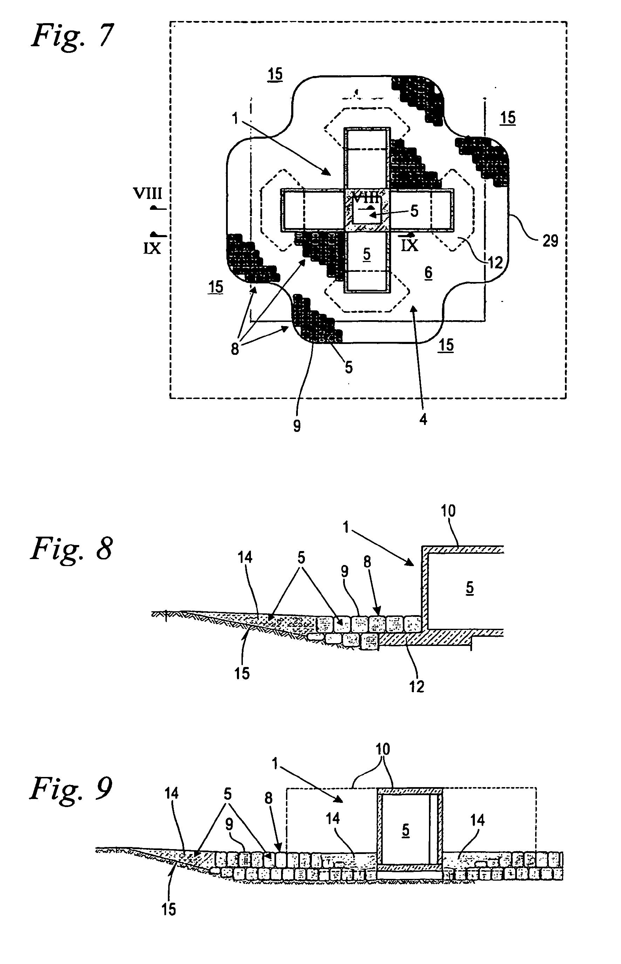

Fig. 3 zeigt die Anordnung nach Fig. 2 mit in einer ersten Baugrube 4 aufgestellter Flachgründung 1, während mittels des Installationsschiffes 16 eine weitere Flachgründung 1' in einer zweiten Baugrube 4' installiert wird. Es sind dabei die Verhältnisse an einem Installationsort mit einer Vielzahl von Baugruben 4,4' für eine ebensolche Anzahl von Flachgründungen 1, 1' und Offshore-Windenergieanlagen 2 gezeigt, wobei hier der besseren Übersichtlichkeit halber nur zwei Baugruben 4, 4' dargestellt sind. Nach dem erfindungsgemäßen Verfahren und der erfindungsgemäßen Installationsanordnung ist vorgesehen, dass zunächst die erste Flachgründung 1 auf die planierte Sohle 6 der ersten Baugrube 4 aufgestellt wird, und dass die zweite Baugrube 4' ausgehoben und planiert wird, wobei der bei der zweiten Baugrube 4' entstehende und weiter unten beschriebene Aushub 5 unmittelbar zu einem Kolkschutz 8 (Fig. 7 bis 9) weiterverarbeitet und zumindest teilweise in der ersten Baugrube 4 mit der ersten Flachgründung 1 eingesetzt wird. Außerdem kann ein Teil des bei der zweiten Baugrube 4' entstehende Aushubes 5 in der zweiten Baugrube 4' mit der zweiten Flachgründung 1' eingesetzt werden.

Hierzu ist eine schwimmende Arbeitsplattform 13 vorgesehen, die auch als Offshore-Construction-Vessel (OCV) bezeichnet wird. Mittels der schwimmenden Arbeitsplattform 13 werden die Baugruben 4, 4' ausgehoben und fertiggestellt. Dies kann insbesondere durch Absaugung der Deckschicht 17 (Fig. 1) und optional des tragfähigen Materials 7 geschehen, wobei der dabei entstehende Aushub 5 zur Arbeitsplattform 13 entsprechend einem Pfeil nach Fig. 3 hoch gefördert und dort zwischengelagert und/oder zu einem Kolkschutz 8 (Fig. 7 bis 9) weiterverarbeitet wird. Die schwimmende Arbeitsplattform 13 pendelt entsprechend einem Doppelpfeil 24 zwischen den beiden Baugruben 4, 4' hin und her, so dass der dort zwischengelagerte bzw. weiterverarbeitete Aushub 5 entsprechend den Pfeilen nach Fig. 3 zur ersten Baugrube 4 und/oder zur zweiten Baugrube 4' verbracht und dort in weiter unten näher beschriebener Weise eingesetzt werden kann.

In jedem Falle erfolgt jedoch die Weiterverarbeitung und/oder die Zwischenlagerung des Aushubes 5 auf der schwimmenden Arbeitsplattform 13 in unmittelbarer Nähe zu den Baugruben 4, 4' und unmittelbar nach dem Entstehen des Aushubes 5 bei der Erstellung der zweiten Baugrube 4'. Diese Unmittelbarkeit bedeutet, dass der Aushub 5 planmäßig nicht auf dem Meeresgrund 3 zwischengelagert und auch nicht vom Installationsort forttransportiert wird. Außerdem ist insbesondere vorgesehen, dass sämtlicher Aushub 5 der Baugruben 4, 4' vollständig wieder in den Baugruben 4, 4' eingesetzt wird, was in gleicher Weise auch für alle anderen nachfolgenden Baugruben 4, 4' gilt. Außerdem ist die Zufuhr von weiterem Material, insbesondere für die Bildung eines Kolkschutzes 8 (Fig. 7 bis 9), Ballast oder Füllmaterial nicht vorgesehen, so dass insgesamt eine ausgeglichene Materialbilanz des Aushubes 5 besteht. Von der vorstehenden Maßgabe kann lediglich insoweit abgewichen werden, als geringe Restmengen des Aushubes 5 auf der schwimmenden Arbeitsplattform 13 über einen etwas längeren Zeitraum zwischengelagert werden, um diese Restmenge an anderen Baugruben 4, 4' bzw. Installationsorten mit erhöhtem Bedarf an Aushub 5 einzusetzen.

Die im Ausführungsbeispiel gezeigten Offshore-Windenergieanlagen 2 weisen eine Größe auf, dass deren Flachgründungen 1 eine Grundfläche der Sohle 6 in der Baugrube 4, 4' von beispielsweise 44 m x 44 m erfordern. Auf dieser Grundfläche ist die Flachgründung 1 mit den Fundamentkästen 10 und den Fundamentplatten 12 (Fig. 1) aufgestellt. Oberhalb davon erstreckt sich der Fundamentschaft 11 in einer nach oben konisch sich verjüngenden Form bis zur Wasseroberfläche 18, wobei hier die Wasseroberfläche 18 auf dem Niveau LAT (Lowest Astronomical Tide) gezeigt ist. Darüber ist der Fundamentschaft 11 zylindrisch ausgeführt und erstreckt sich bis zur Schnittstelle 19, die etwa 20 m über der Wasseroberfläche 18 bei LAT liegt.

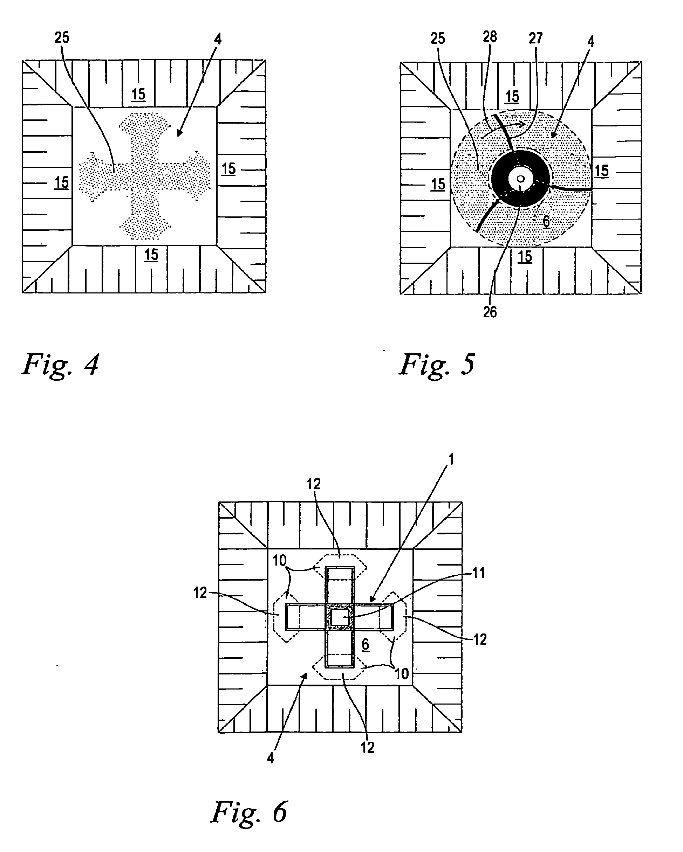

Fig. 4 zeigt eine Draufsicht der Baugruppe 4 nach den Fig. 1 bis 3 nach dem Voraushub durch Ausbaggern bzw. Absaugen des Meeresgrundes 3 (Fig. 1), wobei eine ebene und hier quadratische Grundfläche der Baugrube 4 mit einer Grundfläche von 44 m x 44 m gebildet ist. Anstelle einer quadratischen Grundfläche kann auch eine rechteckige oder runde Grundfläche vorgesehen sein. Angrenzend an die Grundfläche weist die Baugrube 4 ringsum angeordnete Böschungen 15 auf, deren Neigung vorteilhaft in einem Bereich von einschließlich 1:3 bis einschließlich 1:10 liegt und im gezeigten Ausführungsbeispiel etwa 1:5 beträgt. Um die Deckschicht 17 (Fig. 1) zu durchdringen und eine Sohle 6 im tragfähigen Material 7 (Fig. 1) zu erzielen, ist hier beispielhaft eine Tiefe der Baugrube 4 von etwa 3 m vorgesehen, woraus sich bei der gegebenen Böschungsneigung von etwa 1:5 eine Böschungsbreite von 15 Metern ergibt. Bei größeren oder kleineren Aushubtiefen wird dementsprechend auch die Breite der Böschungen 15 größer oder kleiner. In jedem Falle ist die Grundfläche der Baugrube 4 innerhalb der Böschungen 15 so groß zu wählen, dass eine schattiert dargestellte Grundfläche 25 der Flachgründung 1 (Fig. 1, 3) auf dem ebenen Boden der Baugrube 4 Platz findet.

Nachdem die Baugrube 4 entsprechend der Darstellung nach Fig. 4 durch einen absaugenden oder ausbaggernden Voraushub seine Grobform erreicht hat, wird die Sohle 6 der Baugrube 4 insbesondere durch Abtrag des dann freiliegenden tragfähigen Materials 7 (Fig. 1) planiert. Hierzu wird entsprechend der Darstellung nach Fig. 5 eine Planiereinrichtung 26 auf den Grund der Baugrube 4 abgesenkt. Die Planiereinrichtung 26 umfasst mehrere, hier drei Planierflügel 27, die in Richtung eines Pfeiles 28 drehend angetrieben werden. Die Planierflügel 27 streichen über die Sohle 6 und tragen dabei weiteres tragfähiges Material 7 (Fig. 1) ab, welches je nach Drehrichtung als weiterer Aushub 5 auf die schwimmende Arbeitsplattform 13 (Fig. 3) gefördert oder nach außen zum Fuß der Böschung 15 transportiert wird. Hierdurch wird die Sohle 6 auf eine Toleranz von wenigen Höhenzentimetern planiert, wodurch eine sichere Aufstellfläche der Flachgründung 1 (Fig. 3) direkt auf der aus dem tragfähigen Material 7 bestehenden Sohle 6 gebildet wird.

Nachdem die Sohle 6 entsprechend der Darstellung nach Fig. 5 planiert wurde, wird die Flachgründung 1 entsprechend der Darstellung nach den Fig. 1 bis 3 auf die Sohle 6 aufgestellt. Eine Draufsicht dieser Anordnung ist in Fig. 6 dargestellt. Dort ist zu erkennen, dass die Flachgründung 1 im Grundriss durch kreuzförmig angeordnete Fundamentkästen 10 gebildet ist, die hohl sind, und in deren Kreuzungspunkt der ebenfalls hohle Fundamentschaft 11 angeordnet ist. An den jeweils radial äußeren Enden tragen die Fundamentkästen 10 je eine Fundamentplatte 12, mit denen die Flachgründung 1 auf der Sohle 6 der Baugrube 4 aufsteht.

Fig. 7 zeigt die Anordnung nach Fig. 6 in einem weiter fortgeschrittenen Installationszustand. Für den Einbau des Kolkschutzes 8 werden die befüllten Container 9 von der schwimmenden Arbeitsplattform 13 (Fig. 3) mit Hilfe eines sogenannten Fallpipe-Systems oder eines Kransystems bis wenige Meter über dem Meeresgrund 3 abgelassen und dort gezielt um die Flachgründung 1 herum eingebaut. Innerhalb einer hier näherungsweise kreuzförmigen Kontur 29, die die Flachgründung 1 einschließlich ihrer Fundamentplatten 12 vollständig sowie Teile der Böschungen 15 überdeckt, wird ein Kolkschutz 8 aufgeschichtet. Aus der Zusammenschau mit Fig. 3 ergibt sich, dass der Kolkschutz 8 aus dem Aushub 5 gebildet wird, der seinerseits aus der abgetragenen Deckschicht 17 sowie aus dem ebenfalls abgetragenen tragfähigen Material 7 (Fig. 1) besteht. Dieser auf der schwimmenden Arbeitsplattform 13 zwischengelagerte Aushub 5 wird dort in textile Container 9 eingefüllt, die als Kolkschutz 8 eingesetzt werden. Durch die hohle Ausgestaltung der Fundamentkästen 10 und des Fundamentschaftes 11 sind Ballastkammern gebildet, die mit einem weiteren Teil des Aushubes 5 als Ballast befüllt werden, um das Gesamtgewicht der als Schwergewichtsgründung wirkenden Flachgründung 1 zu erhöhen.

Fig. 8 zeigt eine Querschnittsdarstellung der Anordnung nach Fig. 7 entlang der dort eingetragenen, mit VIII-VIII gekennzeichneten Schnittlinie, während Fig. 9 einen Querschnitt der gleichen Anordnung entlang der mit IX-IX gekennzeichneten Schnittlinie zeigt. Aus der Zusammenschau der Fig. 7 bis 9 ergibt sich, dass der aus den Containern 9 gebildete Kolkschutz 8 teilweise bis an die Fundamentkästen 10 heranreichend aufgeschichtet wird und dabei insbesondere auf den Fundamentplatten 12 zu liegen kommt. Hierdurch wirken die Container 9 nicht nur als Kolkschutz 8, sondern auch als auf den Fundamentplatten 12 aufliegender, die Standfestigkeit der Flachgründung 1 erhöhender Ballast.

Der Reihenfolge nach werden zunächst die hohlen Fundamentkästen 10 sowie ggf. auch der hohle Fundamentschaft 11 mit dem Aushub 5 befüllt, damit die Flachgründung 1 eine zumindest provisorische Standfestigkeit erhält. Anschließend wird der ebenfalls unter Verwendung des Aushubes 5 hergestellte Kolkschutz 8 entsprechend der Darstellung nach den Fig. 7 bis 9 in Position gebracht. Verbleibende Restmengen des Aushubes 5 werden schließlich als loses Füllmaterial 14 in die verbleibenden Zwischenräume zwischen dem Kolkschutz 8 und der Flachgründung 1 sowie auf freie Flächen der Böschungen 15 aufgebracht. Insgesamt wird dabei der vollständige aus den Baugruben 4, 4' (Fig. 3) gewonnene Aushub 5 wieder in den Baugruben 4, 4' eingesetzt.

Das erfindungsgemäße Verfahren wird bevorzugt wie folgt durchgeführt: Sofern ein ausreichend großes Zeitfenster für den Transport von Flachgründungen 1, 1' zum Installationsort und für die Installation zur Verfügung steht, fährt das Installationsschiff 16 zusammen mit einer am Basishafen vorbereiteten zweiten Flachgründung 1' von dort aus los, wobei die erste Baugrube 4 vor dem Zeitpunkt des Eintreffens der zweiten Flachgründung 1' am Aufstellort bereits fertig gestellt und eine erste Flachgründung 1 dort bereits aufgestellt ist. Unter gleichzeitigem Bezug auf die Fig. 1 bis 9 wird in der Zeit, die das Installationsschiff 16 zum Aufstellort benötigt, die zweite Baugrube 4' einschließlich der Planierung der Sohle 6 unter Bildung von Aushub 5 hergestellt. Gleichzeitig erfolgt bzw. beginnt die Zwischenlagerung sowie die Weiterverarbeitung des Aushubes 5 zum Kolkschutz 8 unmittelbar nach seinem Entstehen und in unmittelbarer Nähe zu den Baugruben 4, 4', nämlich auf der schwimmenden Arbeitsplattform 13. Diese Arbeiten werden innerhalb der Zeitdauer, die das Installationsschiff 16 vom Basishafen bis zum Installationsort benötigt, durchgeführt, so dass die zweite Flachgründung 1' in der zweiten Baugrube 4' direkt nach Eintreffen installiert werden kann.

Die schwimmende Arbeitsplattform 13 pendelt nun entsprechend der Darstellung nach Fig. 3 gemäß dem Doppelpfeil 24 zwischen den beiden Baugruben 4, 4' hin und her. Direkt nach dem Absetzen der zweiten Flachgründung 1' in der zweiten Baugrube 4', ggf. bei noch anwesendem Installationsschiff 16, kann zunächst ein Teil des Aushubes 5 als Ballast in die Ballastkammern, insbesondere in den hohlen Fundamentschaft 11 der ersten Flachgründung 1 der ersten Baugrube 4 eingefüllt werden. Unmittelbar danach oder gleich zu Beginn wird ein Teil des Aushubes 5 als Ballast in die Ballastkammern, insbesondere in die Fundamentkästen 10 der zweiten Flachgründung 1' der zweiten Baugrube 4' eingefüllt. Hierdurch wird bei noch anwesendem Installationsschiff 16 eine zumindest provisorische Standsicherheit der zweiten Flachgründung 1' in der zweiten Baugrube 4' sichergestellt. Danach erfolgt das Auffüllen der ersten Baugrube 4 durch Aufschichten des Kolkschutzes 8 und des losen Füllmaterials 14, während das Installationsschiff 16 noch an Absetzarbeiten der zweiten Baugrube 4' eingesetzt ist oder sich bereits auf der Rückfahrt befindet. Die Arbeiten an der ersten Baugrube 4 sind damit abgeschlossen. Gleichzeitig befindet sich die zweite Baugrube 4' mit der dort aufgestellten zweiten Flachgründung 1' nun in demjenigen Zustand wie die erste Baugrube 4 zu Beginn des vorstehend beschriebenen Zyklus, der nun mit weiteren Baugruben 4, 4' aufs Neue beginnt. Hierbei wird eine nicht dargestellte dritte oder weitere Baugrube zur zweiten Baugrube 4' nach dem vorstehend beschriebenen Zyklus, während die bereits beschriebene zweite Baugrube 4' zur ersten Baugrube 4 wird.

Ein Sonderfall der erfindungsgemäßen Vorgehensweise tritt lediglich bei Beginn der Installationsarbeiten ein. Beim Aushub der tatsächlich ersten Baugrube 4 steht noch keine vorangegangene Baugrube für den Einsatz des Aushubes 5 zur Verfügung. Nur in diesem Einzelfall wird der Aushub zur Minimierung der Umweltbeanspruchungen im Bereich einer späteren Baugrubenfläche temporär zwischengelagert. Es kann hierbei vorausgesetzt werden, dass es sich bei dem Aushub 5 um unbelastetes Material handelt, womit diese Vorgehensweise akzeptabel ist. Selbst dieser dort temporär zwischengelagerte Aushub 5 bleibt jedoch nicht dauerhaft dort gelagert, sondern kann vielmehr im Laufe des spätestens Verfahrens eingesetzt werden. Zumindest bei der Installation der letzten Offshore-Windenergieanlage bzw. deren Flachgründung 1 kann dieser Aushub 5 vollständig Verwendung finden, so dass nach Fertigstellung eines vollständigen Parks von Offshore-Windenergieanlagen 2 sämtlicher zwischenzeitlich angefallener Aushub 5 wieder eingesetzt ist.

## Patentansprüche

1. Verfahren zur Installation von mindestens zwei und insbesondere mehreren Flachgründungen (1) insbesondere einer Offshore-Windenergieanlage (2) auf dem Meeresgrund (3), umfassend folgende Verfahrensschritte:
- In den Meeresgrund (3) werden mindestens zwei Baugruben (4, 4') unter Bildung von Aushub (5) eingebracht, wobei die Tiefe der Baugrube (4, 4') derart bemessen ist, dass eine Sohle (6) der Baugrube (4, 4') aus einem für die Flachgründung (1) tragfähigem Material (7) besteht;
- die Sohle (6) der ersten Baugrube (4) wird planiert;
- eine erste Flachgründung (1) wird auf die planierte Sohle (6) einer ersten Baugrube (4) aufgestellt;
- eine zweite Baugrube (4') wird ausgehoben und planiert;
- der bei der zweiten Baugrube (4') entstehende Aushub (5) wird unmittelbar zu einem Kolkschutz (8) weiterverarbeitet;
- der Kolkschutz (8) wird in der ersten Baugrube (4) eingesetzt.

2. Verfahren nach Anspruch 1,
**dadurch gekennzeichnet, dass** die Weiterverarbeitung des Aushubes (5) unmittelbar nach seinem Entstehen in unmittelbarer Nähe zur Baugrube (4, 4') insbesondere auf einer schwimmenden Arbeitsplattform (13) vorgenommen wird.

3. Verfahren nach Anspruch 1 oder 2,
**dadurch gekennzeichnet, dass** eine Zwischenlagerung des Aushubes (5) in unmittelbarer Nähe zur Baugrube (4, 4') insbesondere auf der schwimmenden Arbeitsplattform (13) vorgenommen wird.

4. Verfahren nach einem der Ansprüche 1 bis 3,
**dadurch gekennzeichnet, dass** der Kolkschutz (8) durch textile, mit dem Aushub (5) befüllte Container (9) gebildet wird.

5. Verfahren nach einem der Ansprüche 1 bis 4,
**dadurch gekennzeichnet, dass** der Aushub (5) als Ballast für die Flachgründung (1) eingesetzt wird.

6. Verfahren nach Anspruch 5,
**dadurch gekennzeichnet, dass** die Flachgründung (1) Ballastkammern insbesondere in Form von hohlen Fundamentkästen (10) und/oder eines hohlen Fundamentschaftes (11) aufweist, die mit dem Aushub (5) befüllt werden.

7. Verfahren nach Anspruch 5 oder 6,
**dadurch gekennzeichnet, dass** die Flachgründung (1) auf der planierten Sohle (6) aufliegende Fundamentplatten (12) aufweist, wobei der insbesondere in textile Container (9) eingefüllte Aushub (5) als Ballast auf die Fundamentplatten (12) aufgelegt wird.

8. Verfahren nach einem der Ansprüche 1 bis 7,
**dadurch gekennzeichnet, dass** ein Teil des Aushubes (5) als loses Füllmaterial (14) in die Baugrube (4, 4') eingebracht wird.

9. Verfahren nach einem der Ansprüche 1 bis 8,
**dadurch gekennzeichnet, dass** der Aushub (5) vollständig in die Baugrube (4, 4') bzw. in die Flachgründung (1) eingebracht wird.

10. Verfahren nach einem der Ansprüche 1 bis 9,
**dadurch gekennzeichnet, dass** die Baugrube (4, 4') mit einer Böschung (15) versehen wird, deren Neigung insbesondere in einem Bereich von einschließlich 1:3 bis einschließlich 1:10 liegt und insbesondere etwa 1:5 beträgt.

11. Verfahren nach einem der Ansprüche 1 bis 10,
**dadurch gekennzeichnet, dass** die Sohle (6) der Baugrube (4, 4') durch weiteren Abtrag von tragfähigem Material (7) unter Bildung von weiterem Aushub (5) planiert wird.

## Claims

1. Method for installing at least two and in particular a plurality of flat foundations (1), in particular of an offshore wind turbine generator system (2), on the sea bed (3), comprising the following process steps:
- at least two excavations (4, 4') are made in the sea bed (3) while producing excavated material (5), the depth of the excavation (4, 4') being dimensioned such that a bottom (6) of the excavation (4, 4') consists of a material (7) capable of supporting the flat foundation (1);
- the bottom (6) of the first excavation (4) is graded;
- a first flat foundation (1) is erected on the graded bottom (6) of the first excavation (4);
- a second excavation (4') is made and graded;
- the excavated material (5) produced at the second excavation (4') is immediately processed further into an anti-cratering device (8);
- the anti-cratering device (8) is installed into the first excavation (4).

2. Method according to claim 1,
**characterised in that** the excavated material (5) is processed further immediately after its production in the immediate vicinity of the excavation (4, 4'), in particular on a floating working platform (13).

3. Method according to claim 1 or 2,
**characterised in that** an interim storage of the excavated material (5) is carried out in the immediate vicinity of the excavation (4, 4'), in particular on the floating working platform (13).

4. Method according to any of claims 1 to 3,
**characterised in that** the anti-cratering device (8) is represented by textile containers (9) filled with the excavated material (5).

5. Method according to any of claims 1 to 4,
**characterised in that** the excavated material (5) is used as a ballast for the flat foundation (1).

6. Method according to claim 5,
**characterised in that** the flat foundation (1) comprises ballast chambers, in particular in the form of hollow foundation boxes (10) and/or a hollow foundation shaft (11), which ballast chambers are filled with the excavated material (5).

7. Method according to claim 5 or 6,
**characterised in that** the flat foundation (1) comprises foundation slabs (12) lying on the graded bottom (6), wherein the excavated material (5), which is in particular placed into textile containers (9), is laid on the foundation slabs (12) as a ballast.

8. Method according to any of claims 1 to 7,
**characterised in that** a part of the excavated material (5) is installed into the excavation (4, 4') as loose packing material (14).

9. Method according to any of claims 1 to 8,
**characterised in that** the excavated material (5) is completely installed into the excavation (4, 4') or into the flat foundation (1) respectively.

10. Method according to any of claims 1 to 9,
**characterised in that** the excavation (4, 4') is provided with a slope (15) having a gradient in a range of 1:3 to 1:10 inclusive, and in particular of approximately 1:5.

11. Method according to any of claims 1 to 10,
**characterised in that** the bottom (6) of the excavation (4, 4') is graded by further removal of load-bearing material (7) while producing further excavated material (5).

## Revendications

1. Procédé pour l'installation d'au moins deux et en particulier plusieurs fondations plates (1) en particulier d'une éolienne en mer (2) sur le fond marin (3), comprenant les étapes de procédé suivantes :
- dans le fond marin (3) sont réalisées au moins deux fouilles (4, 4') en formant un déblai (5), étant précisé que la profondeur de la fouille (4, 4') est dimensionnée de telle sorte qu'un fond (6) de la fouille (4, 4') se compose d'un matériau (7) portant pour la fondation plate (1);
- le fond (6) de la première fouille (4) est aplani;
- une première fondation plate (1) est posée sur le fond (6) aplani d'une première fouille (4);
- une deuxième fouille (4') est déblayée et aplanie;
- le déblai (5) qui est formé avec la deuxième fouille (4') est transformé immédiatement en protection anti-affouillement (8);
- la protection anti-affouillement (8) est placée dans la première fouille (4).

2. Procédé selon la revendication 1,
**caractérisé en ce que** la transformation du déblai (5) immédiatement après sa formation est réalisée à proximité immédiate de la fouille (4, 4') en particulier sur une plate-forme de travail flottante (13).

3. Procédé selon la revendication 1 ou 2,
**caractérisé en ce qu'**un stockage temporaire du déblai (5) est réalisé à proximité immédiate de la fouille (4, 4') en particulier sur la plate-forme de travail flottante (13).

4. Procédé selon l'une des revendications 1 à 3,
**caractérisé en ce que** la protection anti-affouillement (8) est formée par des conteneurs textiles (9) remplis avec le déblai (5).

5. Procédé selon l'une des revendications 1 à 4,
**caractérisé en ce que** le déblai (5) est utilisé comme ballast pour la fondation plate (1).

6. Procédé selon la revendication 5,
**caractérisé en ce que** la fondation plate (1) comporte des chambres de ballast en particulier sous la forme de caissons de fondement creux (10) et/ou d'un fût de fondement creux (11) qui sont remplis avec le déblai (5).

7. Procédé selon l'une des revendications 5 ou 6,
**caractérisé en ce que** la fondation plate (1) comporte des plaques de fondement (12) qui sont posées sur le fond (6) aplani, étant précisé que le déblai (5) placé en particulier dans des conteneurs textiles (9) est posé comme ballast sur les plaques de fondement (12).

8. Procédé selon l'une des revendications 1 à 7,
**caractérisé en ce qu'**une partie du déblai (5) est introduite sous forme de matériau de remplissage en vrac (14) dans la fouille (4, 4').

9. Procédé selon l'une des revendications 1 à 8,
**caractérisé en ce que** le déblai (5) est entièrement introduit dans la fouille (4, 4') ou la fondation plate (1).

10. Procédé selon l'une des revendications 1 à 9,
**caractérisé en ce que** la fouille (4, 4') est pourvue d'un talus (15) dont la pente est située en particulier dans une plage de 1:3 inclus à 1:10 et est en particulier d'environ 1:5.

11. Procédé selon l'une des revendications 1 à 10,
**caractérisé en ce que** le fond (6) de la fouille (4, 4') est aplani par l'enlèvement supplémentaire de matériau portant (7), en formant un déblai (5) supplémentaire.
